(19) Europäisches Patentamt / European Patent Office / Office européen des brevets

(11) EP 2 060 940 A1

(12) EUROPEAN PATENT APPLICATION

(43) Date of publication:
20.05.2009 Bulletin 2009/21

(51) Int Cl.:
*G02B 6/255* (2006.01)

(21) Application number: 08166590.3

(22) Date of filing: 14.10.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 15.10.2007 US 998983 P

(71) Applicants:
• CCS Technology Inc.
Wilmington, DE 19803 (US)

• Corning Cable Systems LLC
Hickory, NC 28601 (US)

(72) Inventors:
• Hess, Simon
81247 München (DE)
• Roark, Bryan
Conover, NC 28613 (US)

(74) Representative: Epping - Hermann - Fischer
Patentanwaltsgesellschaft mbH
Ridlerstraße 55
80339 München (DE)

(54) **Optical waveguide splice apparatus and method for displaying information about a splice process**

(57) An optical waveguide splice apparatus, comprises a camera adapted to record an image of at least two optical waveguides, a screen, a control unit coupled to the screen to generate a display representation to be displayed on the screen, wherein the display representation comprises a first region comprises a first portion of the recorded image and a second region comprising a second portion of the recorded image, a semitransparent layer and information about a splice process.

FIG.3

## Description

Field of the invention

The present invention relates to an optical waveguide splice apparatus and to a method for displaying information about a splice process.

Background of the invention

A fusion splicer is commonly used to splice a pair of optical waveguides or fibers by thermally heating the ends of the optical fibers. A fusion splicer may comprise a camera for recording an image of the ends of the optical fibers. During a splice process, the recorded image is displayed on screen of the fusion splicer, thereby allowing a user to monitor the splice process.

Summary of the invention

An optical waveguide splice apparatus according to an embodiment comprises a camera adapted to record an image of at least two optical waveguides, a screen, a control unit coupled to the screen to generate a display representation to be displayed on the screen, wherein the display representation comprises a first region comprising a first portion of the recorded image and a second region comprising a second portion of the recorded image, a semitransparent layer and information about a splice process.
In the embodiment, the recorded image and information about the splice process generated by the control unit of the optical waveguide splice apparatus may be displayed on the screen at the same time. The semitransparent layer provides a visual contrast with respect to the information about the splice process. Thereby, the readability of the information about the splice process is enhanced. Furthermore, an image of ends of optical fibers recorded by the camera and superimposed by the semitransparent layer is visible.
The provision of the semitransparent layer produces the visual impression, that the semitransparent layer is superimposed over the second portion of the recorded image, and that the portion of the recorded image is at least partially visible. This means, that the basic information of the recorded image is maintained in spite of the semitransparent layer.
A semitransparent layer as used herein refers to a layer which is neither fully opaque nor fully transparent. Furthermore, a fully transparent layer has a transparency value of 1 and a fully opaque layer has a transparency of 0. Accordingly, a semitransparent layer has a transparency value of between 0 and 1.

Brief description of drawings

The invention is explained in detail below using exemplary embodiments with reference to the accompanying drawings, in which:

Figure 1 shows an optical waveguide splice apparatus according to an embodiment;

Figure 2 illustrates a schematic view of the optical waveguide splice apparatus shown in Figure 1;

Figure 3 shows a screen of an optical waveguide splice apparatus according to an embodiment, on which a display representation composed of an image recorded by a camera and of splice information is displayed;

Figure 4 shows a screen of an optical waveguide splice apparatus according to an embodiment, on which a display representation composed of an image recorded by a camera and of splice information is displayed;

Figure 5 shows a screen of an optical waveguide splice apparatus according to an embodiment, on which a display representation of an image recorded by a camera is displayed;

Figure 6 shows a screen of an optical waveguide splice apparatus according to an embodiment, on which a display representation comprising splice information is displayed;

Figures 7A, 7B, 7C illustrate the determination of a color value of a pixel of the display;

Figure 8 shows a screen of an optical waveguide splice apparatus according to an embodiment, on which a display representation composed of an image recorded by a camera and of splice information is displayed.

Detailed description of embodiments

In the following description further aspects and embodiments of the present invention are summarized. In addition, reference is made to the accompanying drawings, which form a part hereof, and in which is shown by way of illustration, in which the invention may be practiced. The embodiments of the drawings present a summary in order to provide a better understanding of one or more aspects of the present invention. This summary is not an extensive overview of the invention and neither intended to limit the features or key-elements of the invention to a specific embodiment. Rather, the different elements, aspects and features disclosed in the embodiments can be combined in different ways by a person skilled in the art to achieve one or more advantages of the present invention. It is to be understood that other embodiments may be utilized and structural or logical changes may be made without departing from the scope of the present invention. The elements of the drawing are not necessarily to scale relative to each other. Like reference numerals designate corresponding similar parts.

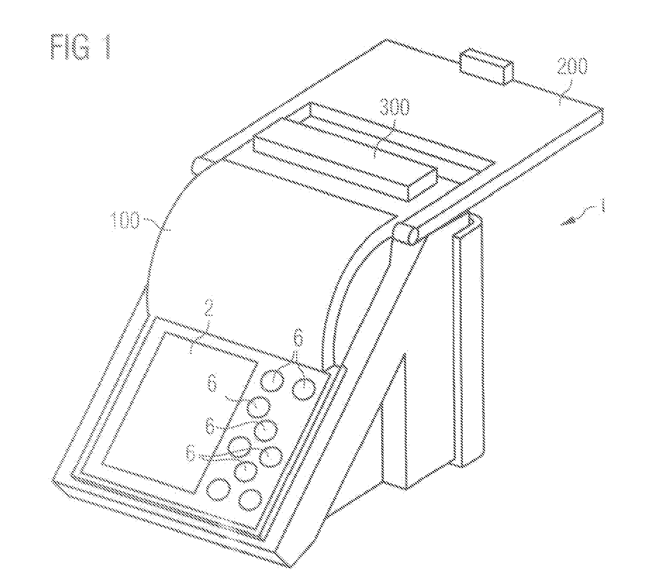

Figure 1 shows an optical waveguide splice apparatus 1 for splicing optical waveguides such as optical fibers according to an embodiment. The fusion splicer 1 comprises a removable cover 100, under which elements of the fusion splicer 1 are disposed.

After splicing ends of optical fibers, the splice region is typically protected from mechanical damage. For protecting the splice region, a shrinking hose may be pulled over the splice region and heated using for example the shrink oven 300. The heating results in a contraction of the shrinking hose wherein the position of the shrinking hose is fixed around the splice.

Control elements 6 such as buttons, allow a user to control the operations of the splicer 1. Operator control may include inputting certain commands and parameters which are processed by a control unit (not shown in Figure 1). The fusion splicer 1 further comprises a screen 2 for displaying computer software application, for example, a graphical user interface of software for controlling the fusion splicer 1.

After the fusion splicer is switched on by pressing for example the button 6f, a main menu of the splicing software is displayed on the display 2. The main menu may comprise a list of sub menus. By means of the buttons 6d, 6e, 6b and 6c, a user can navigate through the different menus. The main menu comprises a sub menu for selecting a specific splice program, a sub menu for controlling the shrink oven 300, a sub menu for changing settings of the fusion splicer and a sub menu for performing maintenance of the fusion splice and so forth.

The cover 200 may be closed when the fusion splicer 1 is not in use, for example, during transporting the fusion splicer 1, to protect the control elements 6 and the screen 2 from being mechanically damaged.

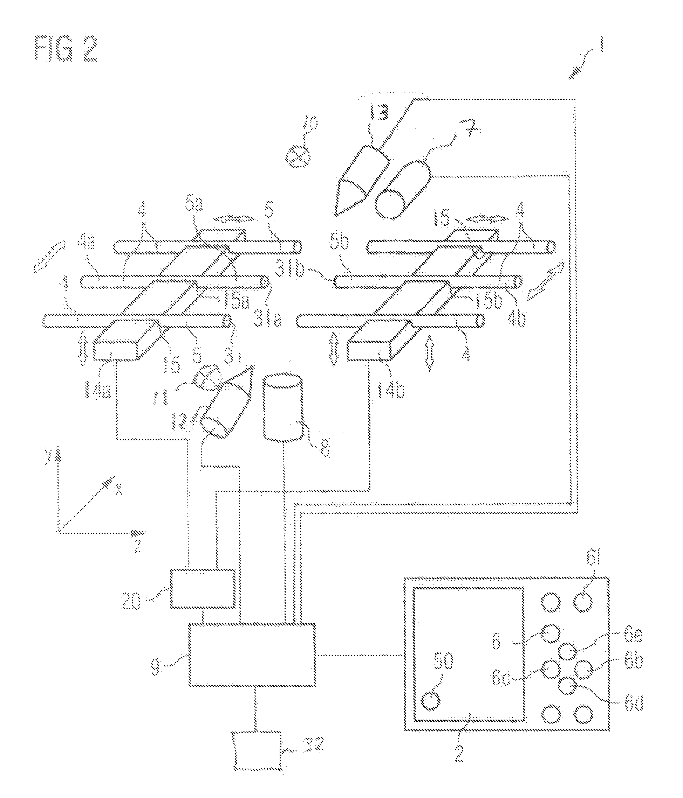

Figure 2 illustrates a schematic view of an optical waveguide splice apparatus 1 according to the embodiment shown in Figure 1. The fusion splicer 1 is used to connect an end 5a of a first optical fiber 4a and an end 5b of a second optical fiber 4b by means of a splice process.

Positioning units 14a, 14b are provided for aligning the ends of the fibers to be spliced. Each of the positioning units 14a, 14b may comprise one or more V-shaped grooves 15 extending along a Z-direction, in which the optical fibers 4 are placed. The positioning units 14a, 14b may comprise 12 of these grooves 15 to receive a plurality of optical fibers 4 contained for example in a ribbon. The first and the second optical fibers 4a, 4b are placed in respective grooves 15a, 15b of the positioning units 14a, 14b such that faces 31a, 31b of the ends 5a, 5b of the first and the second optical fibers 4a, 4b substantially face each other.

The screen 2 is coupled to a control unit 9 and adapted to display a graphical user interface of the application software and the data. The screen 2 may be an LCD screen or a TFT screen. In an embodiment, the screen 2 is configured as a touch screen, wherein the control unit 9 detects when a specific portion 50 of the display 2 is touched by user. In response to the touching of the specific portion 50, the control unit 9 performs a dedicated function of the splice process, for example aligning the ends of the optical fibers or splicing the ends of the optical fibers.

The screen 2 comprises a plurality of pixels arranged in a matrix, which may comprise 640 x 480 pixels. Each of the pixels of the matrix is individually controlled by the control unit 9. A color of each of the pixels is set by assigning each of the pixels a plurality of color values representing an intensity of a respective color. For example, based on the RGB-color model, a first color value R representing the intensity of the color red, a second color value G representing the intensity of the color green and a third color value B representing the intensity of the color blue may be assigned to each of the pixels. Alternatively, a plurality of color values may be assigned to each of the pixels based on the CMYK-, or the HSV-color model.

The fusion splicer 1 further comprises a camera 7, 8 coupled to the control unit 9 for recording an image of an area between a first electrode 12 and a second electrode 13. The first and the second electrode 12, 13 are coupled to the control unit 9 for generating an arc and thereby heating the ends of the optical fibers.

In the embodiment shown in Figure 2, the fusion splicer 1 comprises a first camera 7 for recording an image from a first angle and a second camera 8 for recording an image from a second angle. However, by providing a suitable optical system, only one camera may be used to record alternately or simultaneously images from the first and second angle. As depicted, the first camera 7 records an image along the X-direction and the second camera 8 records an image along the Y-direction. Furthermore, light sources 10 and 11 are provided to illuminate the area between the first and the second electrode 12, 13.

After placing the optical fibers 4 in the positioning units 14a, 14b the splice process for connecting the respective ends 5a, 5b of the optical fibers 4a, 4b can be performed. A splice process may comprise the steps of aligning the ends 5 of the optical fibers 4, analyzing properties of the ends 5 of the optical fibers, splicing the ends 5 of the optical fibers and evaluating the splice result.

The fusion splicer 1 is adapted to allow a user to perform the individual steps of the splice process either manually or automatically using software for controlling the splice process. A storage device 32 coupled to the control unit 9 is provided for storing data and application software, for example, the software for controlling the splice process, and for retrieving the application software and the data.

During the aligning step, the faces 31a, 31b of the optical fibers 4a, 4b are aligned with respect to each other and with respect to the first and the second electrode 12, 13 by moving at least one of the positioning units 14a, 14b using the position control unit 20 which is controlled by the control unit 9. The position control unit 20 may comprise a motor or piezoelectric element to move at least one of the positioning units along the Z-direction. In addition, the position control unit may be adapted to move at least one of the positioning units along the X-direction and/or along the Y-direction.

The cameras 7, 8 are used to record images of the ends 5 of the optical fibers during the splice process. The images of the optical fibers recorded along the X-direction and along the Y-direction may be processed by the control unit 9 to determine the position of the ends 5a, 5b of the optical fibers 4a, 4b. Based on the determined positions, the control unit 9 may calculate an offset along the X-, the Y- and the Z-direction between the ends of a pair of optical fibers and display a warning on the display, if the offset is greater than a predetermined value. In an embodiment, the aligning of the faces 31a, 31b may be based on the calculated offset. Furthermore, the control unit 9 may be adapted to determine the quality of the ends of the optical fibers and to display a warning on the display if the quality does not fulfill certain predetermined requirements. Evaluating the quality of the ends of the optical may include determining if dust or particles are disposed on an optical fiber and if a cleave angle of an end of an optical fiber is greater than a predetermined value.

The image recorded by the camera 7, 8 comprises a plurality of pixels, wherein a color of a pixel is determined by at least one color value representing intensity or a saturation of specific colors assigned to the pixel. In an embodiment, a color value of a grayscale table may be assigned to each pixel. In an other embodiment, three color values may be assigned to each pixel, wherein a first color value represents an intensity of the color red, a second color value represents an intensity of the color green and a third color value represents an intensity of the color blue. Alternatively, a plurality of color values may be assigned to each of the pixels based on the CMYK-, or on the HSV-color model.

The control unit 9 processes the image recorded by the camera 7, 8 and displays the processed image on the screen 2. In an embodiment, the control unit 9 may comprise a first processor for performing numerical calculations and general control of the fusion splicer 1 and a second processor, for example a graphic processor, for displaying an image on the screen.

Processing the recorded image as used herein includes a number of manipulations of the pixels of the recorded image, for example selecting a portion of the recorded image and enlarging or diminishing the selected portion as well as changing a contrast or a color saturation of the recorded image.

In particular, the control unit 9 generates a display representation to be displayed on the screen 2 by assigning each pixel of the screen respective color values based on respective color values assigned to one or more of the pixels of the recorded image.

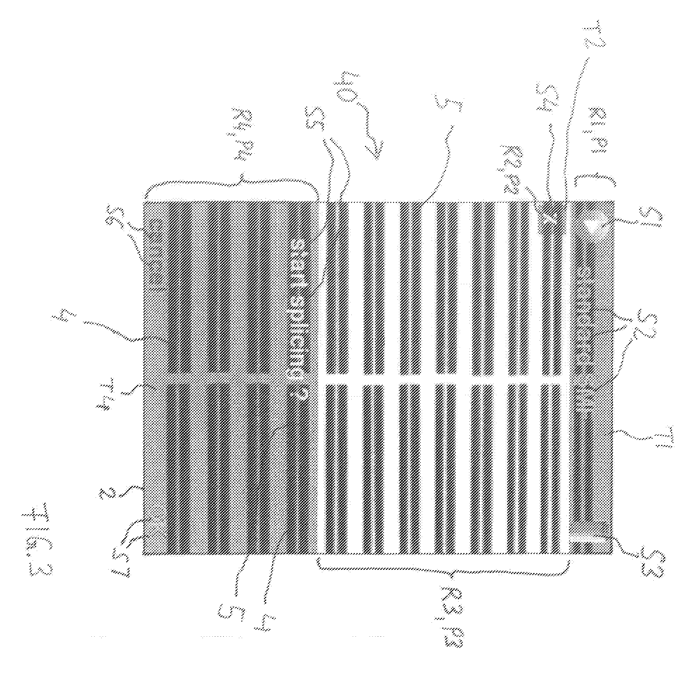

Figure 3 illustrates a view of the display being shown on the screen 2 of the splice apparatus. The display is generated by the control unit of the splice apparatus. The display shows an image recorded by a camera of the splice apparatus. To identify the particular camera the display also shows an icon S4 in its upper left corner. The icon with a marked character "X" indicates that the camera arranged in the x-direction has recorded the underlying image showing the position of the optical fibers 5 and 4. So the user is able to identify the direction from which the picture was taken.

Furthermore, information S2 about the splice process is shown together with a first icon S1 and a battery icon S3 in an upper portion P1 of the display. In addition, a semitransparent layer T1 is provided in the portion P1, such that the portion of R1 of the underlying recorded image is still visible. Consequently, the portion with the splice information S2, S1 and S3 is shown simultaneously with the underlying portion of the recorded image.

In a second portion P3 in region R3 of screen 2, the recorded image is shown, without any additional splice information. The display also comprises a third portion P4 at the lower region R4 of screen 2 providing further splice information.

In this embodiment, the splice information requests an action by the user. Particularly, the splice information in the second portion P4 comprises some characters S5 asking the user whether to start the actual splice process. Two words S6 and S7 having different characters and color are arranged in the lower corners of portion P4. Portion P4 also comprises a semitransparent layer T4 with a color, such that the underlying portion of the recorded image showing various optical fibers is still visible.

The display representation shown on the screen 2 allows simultaneously displaying a splice information image, camera position information and the recorded image. The splice information image comprises the splice information and a semitransparent layer. The splice information image is laid over the recorded image so that the recorded image is still visible. Due to the semitransparent layer in the regions P1, P2 and P4 the information of the underlying recorded image is still visible.

In an embodiment, the semitransparent layers T1, T2, T4 in portions P1, P2, P4 are superimposed on the respective parts of the recorded image. Furthermore, the splice information S1... S7 is superimposed over the semitransparent layers T1, T2 and T4. The semitransparent layers T1, T2, T4 serve to provide a contrast with respect to the splice information S1, ..., S7 and thereby enhancing the readability of the splice information S1, ..., S7. In addition, the portions of the image of the optical fibers superimposed by the respective foregrounds are still visible.

During operation of the splice apparatus, a user is able to see all information about the splice process and the recorded image of, for example, an optical fiber alignment without switching the display representation. Additional and important information in various colors can be superimposed on a recorded image, providing the user with additional information. Particularly, information about the underlying recorded image can be displayed simultaneously on the screen. Thus, a user can be provided with all available information on the screen 2 without switching a display representation between any splice information being displayed or not and the recorded image.

In situations in which the user requires both hands to operate the splice apparatus, for example to prepare optical fibers for a subsequent splice process, the user is able to see his working results without interrupting his work to switch the display. Real-time operation including checking the results of actual process becomes possible. Accordingly, the handling of the fusion splicer is improved and time can be saved during the splice process.

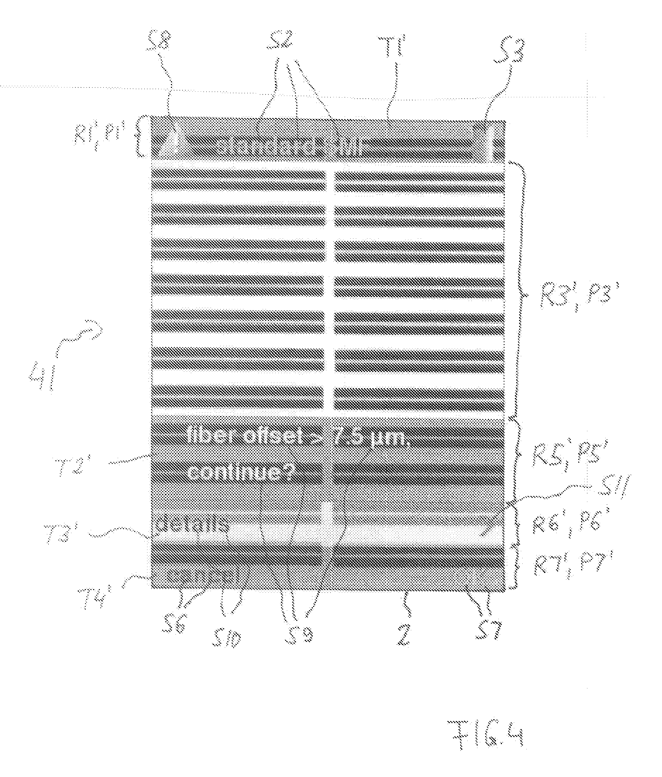

Figure 4 shows a further embodiment of a display shown on a screen 2 combined of a recorded image and one or more splice information images. As in the previous exemplary display, the upper portion P1' in region R1' of screen 2 comprises a superimposed image of a portion of the recorded image and the splicing information image. The latter comprises the same information as in the previous example according to Figure 3.

Further, the user is requested to choose whether to continue the splice process. For this purpose, the lower regions R5', R6' and R7' of the display representation shows information S9 representing a result from a previous measurement. In this case, the user is informed about a fiber offset which is in the particular embodiment >7.5 $\mu$m.

In region R6' showing portion P6', the user can request further details of the previous fiber alignment. This is indicated by characters S10 and S11. In addition, the user may choose in the portion P7' shown in region R7' of screen 2 whether to continue the splice process indicated by the characters S7 or to cancel the splice process indicated by characters S6. Finally, in screen region R3' no additional splice information is displayed and only the recorded image is visible.

Again, the splice information in several portions as well as the underlying recorded image portions is simultaneously displayed. The semitransparent layers T2' in portion P5' of the display may comprise a different color compared to the semitransparent layer T3' in portion P6'. For example, the colors chosen for the foreground T2', T4' and T1' can be set to a different colors compared to semitransparent layer T3'.

The different colors for the semitransparent layers may indicate special functions, which can be requested by the user in order to receive additional information about the splice process. For instance, if the user requests more details by, for example, pressing a button assigned to the character S11 or pressing the appropriate position on the screen, additional information about the splice process may be displayed in portion P5'. Since at least portions P1', P5', p6' and P7' comprise a semitransparent layer, the underlying recorded image is simultaneously visible to a user. In such an embodiment the user can request various information about the splice process, for example the fiber offset while simultaneously controlling the splicing result visually.

In an embodiment, the control unit of the splice apparatus may generate in a first step a splice information image composed of the respective splice information and corresponding semitransparent layers. In a second step, the control unit may generate a combined display representation to be displayed as a display on screen 2 composed of the splice information image and the recorded image.

In another embodiment, the control unit may generate in a first step a plurality of splice information images, wherein each of the splice information images is composed of one of or more splice information and one or more corresponding semitransparent layers. In a second step, the control unit generates a plurality of combined display representations to be displayed on a screen, wherein each combined display representation is composed of a splice information image and a portion of the recorded image.

For this image processing, the control unit may comprise specific circuitry, for instance a graphic processor coupled to the control unit, or a sub-circuits implemented in a main processor. Processing a recorded image as used herein includes a number of manipulations of pixels of the recorded image, for example selecting a portion of the recorded image and enlarging or diminishing the selected portion as well as changing a contrast or color saturation of the recorded image.

In particular, the control unit or a graphic processor may generate an image to be displayed on the screen by assigning each pixel of the image respective color values based on respective color values assigned to one or more of the pixels of the recorded image and the splice information image.

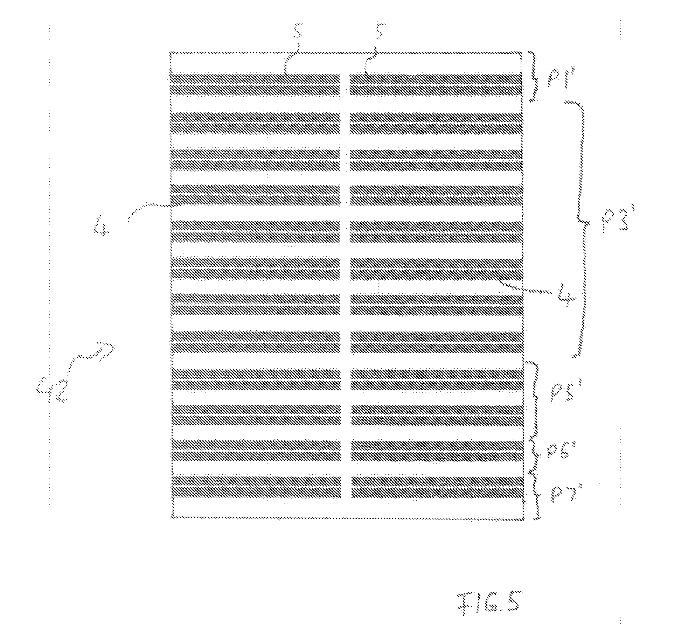

With reference to Figures 5 to 7 the generation of such combined image comprising a splice information image superimposed on a recorded image is explained in greater detail.

Figure 3 shows an image 42 recorded by a camera during the splice process, illustrating the ends 5 of a plurality of optical fibers 4. The size of the image 42 equals the size of the screen, so the recorded image 42 can be displayed on the screen 2 completely. The image 42 comprises a plurality of pixel arranged in rows and columns. Each pixel comprises a value for one or more color values. Depending on a chosen color model, such as RGB, CMYK, HSV or others, a pixel may comprise a single value for different colors. Superposition of the values results in a combined color value of that pixel. Alternately, each pixel can be assigned a value representing a shade of gray, in case only black-white images can be displayed on the screen.

In Figure 5, the references P1' to P7' corresponding to the portions of the combined image and corresponding regions of the screen in the embodiment of Figure 4 are indicated for convenience purposes.

Figure 4 shows the splice information image also comprising a plurality of pixels arranged in rows and columns. The size f the splice information image equals the size of screen 2 and the size of the recorded image. The splice information image comprises the splice information S2, S3 and S6 to S10 displayed on some colored background. The background color in portion T3'' differs from the background color T2'' and T1''. In a portion, which is later shown in region R3' of the screen, no information is displayed.

In the present splice information image 4, the user is informed about the specific splice program being in use and with the symbol S3 about the charge status of a battery of the fusion splicer. Further, information about the results of an alignment step is provided, indicating that an offset between a pair of optical fibers to be spliced is greater than 7.5 $\mu$m. The splice information image also comprises a warning represented by the symbol S8 displayed in the upper portion P1' of the splice information image and by the text "fiber offset > 7.5$\mu$m" S9 displayed in portion P5' of the splice information image. The splice information further comprises the terms "details" S10, "cancel" S6, "OK" S7 displayed on the portions P6' and P7'. In response to the warning being displayed, the user may touch corresponding region of the screen 2, in case screen 2 is a touch-screen which respective information is displayed for affecting the control unit to execute a respective function. For example, if the user touches the region R6' in the embodiment of Figure 4, an information about the offsets of each of the pairs of optical fibers is displayed. Furthermore, the user may touch the part the region R7' of the screen 2 on which the text "cancel" is displayed, to cancel or abort the current splice process. However, the user may also ignore the warning and touch the on which the text "OK" is displayed to continue with the splice process despite the warning.

The control unit or a graphic processor may generate a combined image composed of the recorded image and the splice information image. Such combined image considered as a display representation may then be display as a display on the screen.

Generating the combined display representation includes assigning a pixel of the combined image a combined color value derived from a respective color value of at least one pixel of the recorded image and from a respective color value of a at least one pixel of the splice information image. In an exemplary case of an RGB color model, the combined color values R, G, B are determined by adding the respective color value R1, G1, B1 of the pixels of the recorded image multiplied by an opacity value $\alpha$ and the respective color value R2, G2, B2 of the pixel of the splice information image multiplied by a transparency value.

For example, the intensity of the colors red R, green G and blue B of a pixel of the combined image to be display on the screen is calculated using the following formulas:

$$(1) \quad R = R1 * \alpha + R2 * (1 - \alpha)$$

$$(2) \quad G = G1 * \alpha + G2 * (1 - \alpha)$$

$$(3) \quad B = B1 * \alpha + B2 * (1 - \alpha)$$

wherein $0 \leq \alpha \leq 1$. In the present case, the factor $(1 - \alpha)$ can be considered and defined a transparency value. Accordingly a transparency value of 0 indicated full opacity, while a transparency value of 1 represents full transparency.

Due to the fact that different portions of the splice information image comprise different information, different opacity values are used. For example, colour values R2, G2, B2 of pixel which show parts of the splice information, for instance a portion of a character, may be multiplied with a first transparency value (1 - $\alpha$1), while pixels including only portions of the layers T2", T3'' are multiplied with a different transparency value (1 - $\alpha$2). Accordingly, the corresponding opacity values are different as well. Depending on the chosen values, the background color becomes semitransparent. The first and the second opacity values $\alpha$1, $\alpha$2 may be set by a user by means of the splice software. In one embodiment, the first opacity value $\alpha$1 is 1 and the second opacity value is 0.5. In such case, only the characters and symbols overlap the underlying recorded image, while the remaining portions of the splice information image, including the background portions are semitransparent.

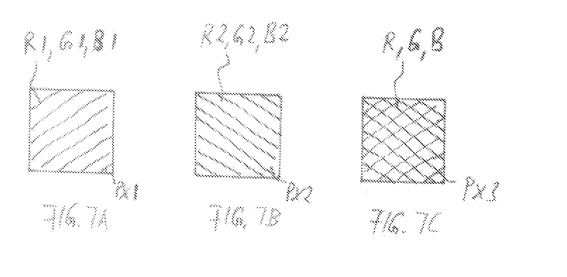

Figures 7A, 7B and 7C illustrate the determination of a colour value of a pixel of the display derived from a colour value of a pixel of the recorded image and a colour value of a pixel of the splice information image. In particular, the pixel of the splice information image comprises a portion of the splice information. Figure 7A shows a pixel PX1 of the recorded image having a colour value R1 representing the intensity of the colour red, a colour value G1 representing the intensity of the colour green and a colour value B1 representing the intensity of the colour blue. The pixel PX2 of the image comprising the splice information has a colour value R2 representing the intensity of the colour red, a colour value G2 representing the intensity of the colour green and a colour value B2 representing the intensity of the colour blue. The colour values R, B, G of the pixel PX3 are determined using the above recited formulas (1), (2) and (3), wherein $\alpha$ is set to 0.5. As depicted, the pixel PX3 has a colour combined from the colors of the pixels PX1 and PX2.

After all pixels of the combined image are calculated by assigning each of the pixels of the display respective colour values R, G, B using the above mentioned formula the combined image is displayed on the screen.

Referring back to Figure 4, the Figure illustrates the result of such superimposition of the images according to Figures 5 ad 6 using and different transparency and opacity values. By adjusting the opacity value $\alpha$ and the transparency value (1 - $\alpha$), a user can individually select the best display representation.

The image 41 comprises a first portion P1' displayed in the first region R1' of the screen 2, a second portion P3' displayed in the second region R2' and further portions P5' to P7' displayed in the third respective regions.

The colour values of each pixel of the portion P3' are determined by a first opacity value $\alpha$1. In the embodiment shown in Figure 4, $\alpha$1 equals 0. Accordingly, the optical fibers are fully visible.

The portions P5' to P7' of the combined image 41 are composed of the corresponding portions of the recorded image 42 and of the splice information image 42. Accordingly, colour values of pixels of the portions P5' to P7' derived from a pixel comprising a portion of the splice information S6, s7 or S9 are determined by a second opacity value $\alpha$2. In the embodiment shown in Figure 7, $\alpha$2 equals 1. Therefore, the pixels of the second region R2 of the display 2, which comprise a portion of the splice information, are opaque.

The colour values of the remaining pixels of the portions P5' to P7' are determined by the corresponding pixels of the splice information image multiplied by a third opacity value $\alpha$3. In the embodiment shown in Figure 4, $\alpha$3 = 0.5. However, other values for $\alpha$3 may be used, for example $\alpha$3 may be between 0.3 and 0.7.

Finally, the portion P1' of image 41 is composed of the respective portion of the recorded image and of the image 4. The colour values R, G, B of those pixels derived from a pixel comprising the splice information S2, S3 and S8 are determined by the second opacity value $\alpha$2 or the third opacity value $\alpha$3, wherein in the exemplary embodiment shown in Figure 2 $\alpha$2 equals 1. Accordingly, thee pixels are opaque.

The colour values R, G, B of the remaining pixels of portion P1' are determined by the third opacity value $\alpha$3. In the embodiment shown in Figure 5, $\alpha$3 = 0.5. However, other values for $\alpha$3 may be used, for example $\alpha$3 may be between 0.3 and 0.7.

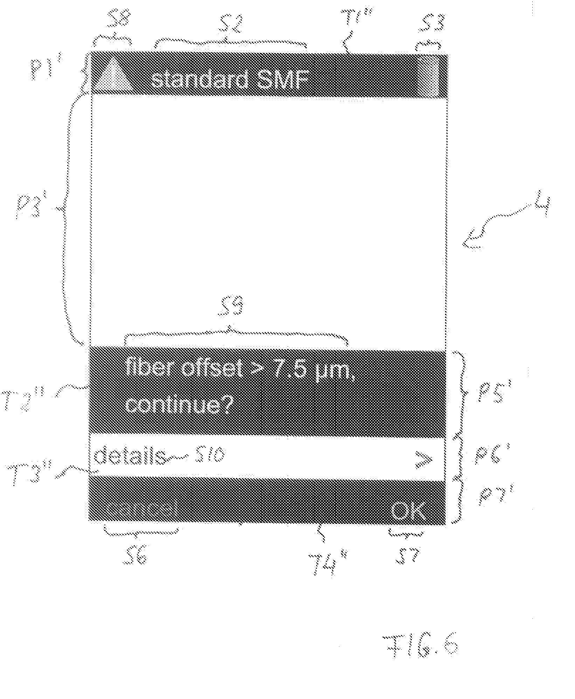

By using suitable values for $\alpha$2 and $\alpha$3 for determining the color values of the pixels of P1', P5 to P7', the opaque layers of the corresponding portions shown in Figure 6 is transformed into a semitransparent layer.

Accordingly, the combined image comprises parts with portions of the recorded image 42, a semitransparent layer T1' to T4' superimposed over those portions of the recorded image and some splice information S2 to S8 superimposed over the semitransparent foreground 36. By selecting opacity values $\alpha$2 and $\alpha$3 suitably, the optical fibers comprised in the second portion P2 and the third portion P3 of the recorded image 40 are visible while the splice information is simultaneously displayed.

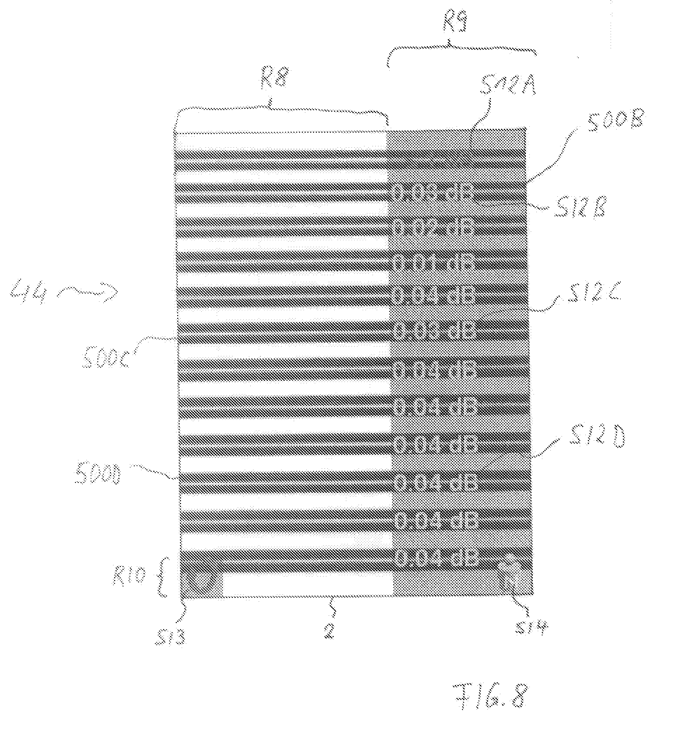

A further embodiment is shown in Figure 8. In this representation, the combined image displayed on screen shows a recorded image of a plurality of spliced optical fibers 500b to 500D on which on the right side quality parameters of the optical fibers are presented. Particularly, the attenuations determined in the previous measurement are displayed onto a semitransparent portion in region R9 of the screen 2. Each attenuation result is assigned to a corresponding optical fiber. A user is now able to check the optical fibers visually, for example to determine why a specific optical fiber comprises a very high or a very low attenuation.

For instance, very high attenuation of greater than 1 dB illustrated in character S12A in a different color is assigned to the first optical fiber in the upper part of a display representation. A user may now study the recorded image, particularly the optical fiber, to possibly determine the error causing the higher attenuation. Such study can be performed without changing the display. The different color for character S12A also indicate to the user a critical attenuation for the corresponding optical fiber.

In the lower right and left edges of the display representation in region R10 two further icons S13 and S14 are displayed having a semitransparent foreground. By choosing one of the icons, for instance touching the screen at the appropriate position or selecting the icons by pressing a specific button, a user may repeat the previous measurement, continue the splicing process or cancel the whole process.

As a result the simultaneous representation of information about the splice process and an image of a splice to be or already performed provides a high flexibility and improvement. A user does not have to switch between the splice information being displayed or not by pressing a dedicated button. In particular in situations, in which the user uses both hands, for example to prepare optical fibers for a following splice process, the user does not have to interrupt his work to perform the switching.

**Claims**

1. An optical waveguide splice apparatus (1), comprising:

   - a camera (7, 8) adapted to record an image (40);
   - a screen (2);
   - a control unit (9) coupled to the screen (2) to generate a display representation to be displayed on said screen (2), said display representation comprising a first region comprising a first portion (P3') of said recorded image (42) and a second region, said second region comprising a second portion (P5') of said recorded image, a semitransparent layer and an information (S2 to S8) about a splice process.

2. The optical waveguide splice apparatus (1) according to claim 1, wherein a transparency of the semitransparent layer and/or a transparency of the information about the splice process is adjustable by setting opacity or transparency value.

3. The optical waveguide splice apparatus (1) according to any of claims 1 to 2, wherein the information about the splice process comprises at least a graphical item, particularly a character or a symbol.

4. The optical fiber splice apparatus according to any of claims 1 to 3, wherein the screen (2) is configured as a touch screen and wherein the control unit (9) is adapted to execute a function in response to a region (50) of the screen being touched by a user, said region (50) of the screen (2) corresponding to a portion of said second region of said display representation.

5. An optical waveguide splice apparatus (1), comprising:

   - a screen (2);
   - a camera (7, 8) adapted to record a first image (42) of at least two optical waveguides;
   - a control unit (9) coupled to the screen (2) and adapted to provide a second image (4) which comprises information (S2 to S8) about a splice process and further adapted to generate a composed display representation to be displayed on the screen;
   - said display representation comprising a plurality of pixels and composed by assigning each pixel of the plurality of pixels a combined color value derived from a first color value of a pixel of the first image (42) and from a second color value of a pixel of the second image (42);

   wherein said combined color value is determined by adding said first color value multiplied by one of at least two opacity values and said second color value multiplied by one of at least two transparency values.

6. The optical waveguide splice apparatus (1) according to claim 5, wherein combined color values of a first set of each pixel are determined by adding said first color value multiplied by a first opacity value and said second color value multiplied by a first transparency value, and combined color values of a second set of each pixel are determined by adding said first color value multiplied by a second opacity value and said second color value multiplied by a second transparency value.

7. The optical waveguide splice apparatus (1) according to claim 6, wherein the color values of a third set of each pixels are determined by adding said first color value multiplied by a third opacity value and said second color value multiplied by a third transparency value.

8.  The optical waveguide splice apparatus (1) according to any of claims 5 to 7, wherein a first of the at least two opacity values equals 1 and a second of the at least two opacity values equals 0.

9.  The optical waveguide splice apparatus (1) according to any of claims 5 to 8, wherein the screen (2) is configured as a touch screen and wherein the control unit (9) is adapted to execute a function of a splice process in response to a touching a region (50) of said screen (2) by a user, said region (50) of said screen (2) corresponding to at least a portion of the display representation.

10. A method for displaying information about a splice process on a screen (2), the method comprising:

    - recording an image of at least two optical waveguides;
    - providing an information about a splice process;
    - generating a display representation comprising a first region comprising a first portion of said recorded image and a second region comprising a second portion of said recorded image, a semitransparent layer and the information about a splice process;
    - setting at least one of a transparency of the semitransparent foreground and a transparency of the information about the splice process;
    - displaying said display representation on said screen (2).

11. The method according to claim 10, wherein providing said information about said splice process comprises providing at least a graphical item, a character or a symbol.

12. A method for displaying information about a splice process on a screen (2), the method comprising:

    - recording a first image of at least two optical waveguides;
    - providing a second image comprising information about the splice process;
    - generating a display representation having a first region (P3') and a second region (P5', P6'), the first region (P3') comprising a first portion of the first image and the second region (P5', P6') comprising a composed image of a second portion of the first image and of the second image, wherein the second region (P5', P6') is at least partially semitransparent; and
    - displaying the display representation on the screen (2).

13. The method according to claim 12, wherein generating the display representation comprises:

    - adding a first color value of a pixel of the first image multiplied by one of at least two opacity values and a second color value of a pixel of the second image multiplied by one of at least two transparency values to provide a combined color value;
    - assigning a pixel of the display representation the combined color value.

14. The method according to claim 13, wherein the screen comprises a plurality of pixels and wherein generating the display representation comprises:

    - adding said first color value multiplied by a first opacity value and said second color value multiplied by a first transparency value to provide a first combined color value;
    - assigning a pixel of a first set of the plurality of pixels the first combined color value;
    - adding said first color value multiplied by a second opacity value and said second color value multiplied by a second transparency value to provide a second combined color value; and
    - assigning a pixel of a second set of the plurality of pixels the second combined color value.

15. The method according to claim 14, wherein a number of pixels of the second image equals the number of pixels of the display representation.

FIG 1

FIG 2

FIG.3

FIG.4

FIG.5

FIG.6

R1, G1, B1

R2, G2, B2

R, G, B

FIG. 7A

FIG. 7B

FIG. 7C

FIG.8

Europäisches
Patentamt

European
Patent Office

Office européen
des brevets

## EUROPEAN SEARCH REPORT

Application Number

EP 08 16 6590

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 055 902 A (FURUKAWA ELECTRIC CO LTD [JP]) 29 November 2000 (2000-11-29) | 1-3, 10-12 | INV. G02B6/255 |
| Y | * paragraphs [0001] - [0030]; figures 1-8 * | 4-9, 13-15 | |
| | ----- | | |
| X | JP 2006 047817 A (FURUKAWA ELECTRIC CO LTD) 16 February 2006 (2006-02-16) * abstract * * paragraphs [0016] - [0033]; figures 1-6 * | 1-3, 10-12 | |
| | ----- | | |
| Y | WO 2005/106548 A (CORNING CABLE SYS LLC [US]; ROARK BRYAN R [US]; RENFRO JR JAMES G [US]) 10 November 2005 (2005-11-10) * the whole document * | 4 | |
| | ----- | | |
| A | DE 20 2007 009481 U1 (CCS TECHNOLOGY INC [US]) 13 September 2007 (2007-09-13) * the whole document * | 1-4, 10-12 | |
| | ----- | | |
| Y | US 5 874 967 A (WEST R MICHAEL P [US] ET AL) 23 February 1999 (1999-02-23) * column 1, line 1 - column 8, line 27; figures 1,2 * | 5-9, 13-15 | TECHNICAL FIELDS SEARCHED (IPC) G02B G06T |
| | ----- | | |

The present search report has been drawn up for all claims

| Place of search | Date of completion of the search | Examiner |
|---|---|---|
| Munich | 27 March 2009 | Wolf, Steffen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&  : member of the same patent family, corresponding
document

EPO FORM 1503 03.82 (P04C01)

Europäisches
Patentamt

European
Patent Office

Office européen
des brevets

Application Number

EP 08 16 6590

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 08 16 6590

The Search Division considers that the present European patent application does not comply with the
requirements of unity of invention and relates to several inventions or groups of inventions, namely:

```
   1. claims: 1-4,10-12

                   Splice apparatus with touch screen
                          ---

   2. claims: 5-9,13-15

           Splice apparatus with colour value at each pixel combined
           from pixels of different images
                          ---
```

**ANNEX TO THE EUROPEAN SEARCH REPORT
ON EUROPEAN PATENT APPLICATION NO.**

EP 08 16 6590

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2009

| Patent document cited in search report | | Publication date | Patent family member(s) | | Publication date |
|---|---|---|---|---|---|
| EP 1055902 | A | 29-11-2000 | CA<br>WO | 2320043 A1<br>0036366 A1 | 22-06-2000<br>22-06-2000 |
| JP 2006047817 | A | 16-02-2006 | NONE | | |
| WO 2005106548 | A | 10-11-2005 | NONE | | |
| DE 202007009481 | U1 | 13-09-2007 | NONE | | |
| US 5874967 | A | 23-02-1999 | JP<br>JP | 3355596 B2<br>8329259 A | 09-12-2002<br>13-12-1996 |

EPO FORM P0459

For more details about this annex : see Official Journal of the European Patent Office, No. 12/82